# EUROPÄISCHE PATENTANMELDUNG

(11) **EP 4 553 107 A1**
(43) Veröffentlichungstag der Anmeldung: **14.05.2025**
(21) Anmeldenummer: 24208825.0
(22) Anmeldetag: 25.10.2024
(51) Int. Cl.: C08K 3/36

(54) **MINERALGEFÜLLTE POLYAMID-FORMMASSEN**

(30) Priorität: 13.11.2023 CH 12562023
(71) Anmelder: EMS-CHEMIE AG, 7013 Domat/Ems (CH)
(72) Erfinder: HARDER, Philipp, 7000 Chur (CH)
(74) Vertreter: Pfenning, Meinig & Partner mbB

(57) **Zusammenfassung**

Die vorliegende Erfindung betrifft mineralgefüllte thermoplastische Polyamid-Formmassen bestehend aus:
A 20 - 89.9 Gewichtsprozent wenigstens eines Polyamids;
B 10 - 55 Gewichtsprozent mineralischer Füllstoff, bestehend aus einer Mischung aus 45 bis 70 Gew.-% (krypto) kristalliner Kieselsäure B1, 5 bis 15 Gew.-% amorpher Kieselsäure B2 und 20 bis 40 Gew.-% kalziniertem Kaolin (B3), jeweils bezogen auf 100 Gew.-% B, wobei die Komponente B einen Aluminiumoxid-Gehalt von 5 - 20 Gew.-%, und einen Siliciumoxid-Gehalt von 80 - 95 Gew.-%, bezogen auf 100 % B aufweist;
C 0 - 15 Gew.-% Glas- und/oder Kohlenstofffasern;
D 0.1 - 5.0 Gewichtsprozent schwarze Farbmittel;
E 0 - 5.0 Gewichtsprozent Additive;
wobei die Summe gebildet aus A bis E 100 % der thermoplastischen Polyamid-Formmasse ergibt und wobei die Polyamid-Formmasse eine Farbhelligkeit L* von maximal 30 aufweist, falls der Glanz mitgemessen wird und von maximal 12 aufweist, falls der Glanz nicht mitgemessen wird.

## Beschreibung

### TECHNISCHES GEBIET

Die vorliegende Erfindung betrifft thermoplastische, mineralgefüllte Polyamid-Formmassen sowie daraus hergestellte Formkörper, die einen besonders tiefschwarzen Farbeindruck aufweisen. Des Weiteren betrifft die Erfindung die Verwendung von spezifischen mineralischen Füllstoffen in schwarzeingefärbten, mineralgefüllten Polyamid-Formmassen, konkret einen mineralischen Füllstoff, bestehend aus einer Mischung von kristalliner Kieselsäure, amorpher Kieselsäure und kalziniertem Kaolin, zur Verbesserung des tiefschwarzen Farbeindrucks.

### STAND DER TECHNIK

Thermoplastische Polyamid-Werkstoffe haben sich für die Herstellung von strukturellen Bauteilen unter anderem wegen ihrer guten mechanischen Eigenschaften, der Widerstandsfähigkeit gegenüber Chemikalien, der guten Verarbeitbarkeit, des niedrigen spezifischen Gewichts etc. in vielen Bereichen durchgesetzt, insbesondere im Automobilbereich, aber auch im Elektronik-Bereich, beispielsweise für Gehäuse von tragbaren Geräten.

In vielen Anwendungen werden schwarzeingefärbte Formmassen gefordert. Während bei mit Glasfasern gefüllten Polyamid-Formmassen ein ausreichend tiefschwarzer Farbeindruck erreicht werden kann, weisen mineralgefüllte Polyamid-Formmassen ein eher anthrazitgraues Erscheinungsbild auf. Hier greift die vorliegende Erfindung ein.

### DARSTELLUNG DER ERFINDUNG

Es ist entsprechend Aufgabe der Erfindung, eine mineralgefüllte, thermoplastische Polyamid-Formmasse bereitzustellen, welche für die genannten Anwendungen geeignete mechanische Eigenschaften aufweist, aber gleichzeitig auch einen tiefschwarzen Farbeindruck ergibt.

Es ist insbesondere Aufgabe der Erfindung eine mineralgefüllte Polyamid-Formmasse bereitzustellen, welche eine Farbhelligkeit L*, bestimmt gemäss DIN EN ISO 11664-4:2020 im CIELAB-Farbraum an einer Platte der Dimension 60 x 60 x 2 mm, von maximal 30 aufweist, falls der Glanz mitgemessen wird und von maximal 12 aufweist, falls der Glanz nicht mitgemessen wird.

Diese Aufgabe wird gelöst durch die Gegenstände der Ansprüche, insbesondere durch eine erfindungsgemäss modifizierte thermoplastische Polyamid-Formmasse gemäss Anspruch 1, die Formkörper gemäss Anspruch 15 sowie die Verwendung eines mineralischen Füllstoffs, bestehend aus einer Mischung aus 45 bis 70 Gew.-% (krypto) kristalliner Kieselsäure (B1), 5 bis 15 Gew.-% amorpher Kieselsäure (B2) und 20 bis 40 Gew.-% kalziniertem Kaolin (B3), jeweils bezogen auf 100 Gew.-% (B), wobei die Komponente (B) einen Aluminiumoxid-Gehalt von 5 - 20 Gew.-%, und einen Siliciumoxid-Gehalt von 80 - 95 Gew.-%, jeweils bezogen auf 100 % (B), aufweist, in einer Polyamid-Formmasse zur Verbesserung des tiefschwarzen Farbeindrucks gemäss Anspruch 16. Ein Kern der Erfindung besteht damit letzten Endes darin, dass unerwarteter Weise gefunden wurde, dass die Verwendung eines mineralischer Füllstoffs, bestehend aus einer Mischung aus 45 bis 70 Gew.-% (krypto) kristalliner Kieselsäure (B1), 5 bis 15 Gew.-% amorpher Kieselsäure (B2) und 20 bis 40 Gew.-% kalziniertem Kaolin (B3), jeweils bezogen auf 100 Gew.-% (B), wobei die Komponente (B) einen Aluminiumoxid-Gehalt von 5 - 20 Gew.-%, und einen Siliciumoxid-Gehalt von 80 - 95 Gew.-%, jeweils bezogen auf 100 % (B), aufweist, als Ersatz für andere mineralische Füllstoffe in einer thermoplastischen, schwarzeingefärbten Polyamid-Matrix dazu führt, dass der tiefschwarze Farbeindruck aussergewöhnlich deutlich verbessert wird. Dies ohne dass dabei die vorteilhaften mechanischen Eigenschaften verloren gehen.

Es ist grundsätzlich aus anderen Gebieten bekannt, dass einem Polyamid-Werkstoff ein Füllstoff, bestehend aus einer Mischung von (krypto)kristalliner Kieselsäure, amorpher Kieselsäure und kalziniertem Kaolin beigemischt werden kann, dies aber nicht im Zusammenhang mit der Verbesserung eines tiefschwarzen Farbeindrucks und auch nicht im Zusammenhang mit den spezifischen Polyamid-Formmassen, wie sie hier beschrieben werden.

Namentlich sei im Zusammenhang mit dem Stand der Technik auf folgende Dokumente hingewiesen:
WO2018069055 offenbart brandwidrig ausgerüstete, thermoplastische Polyamid-Formmassen, die neben einer Melamin-Verbindung einen mineralischen Füllstoff aufgebaut aus einer Mischung aus im Wesentlichen (krypto)kristalliner und amorpher Kieselsäure und kalziniertem Kaolin enthalten. Die Formmassen sollen gute mechanische Eigenschaften und einen guten Flammschutz aufweisen. Insbesondere sollte der Zusatz von mineralischen Füllstoffen einen Flammschutz ermöglichen, aus dem möglichst geringe Nachbrennzeiten bei der Glühdrahtprüfung resultieren. Weiterhin wird hervorgehoben, dass die Formmassen sich besonders gut in hellen Farben einfärben lassen.

Die hier im Rahmen dieser Anmeldung vorgeschlagenen thermoplastischen Polyamid Formmassen sind bevorzugt frei von Flammschutzmitteln, insbesondere frei an Melaminverbindungen.

WO2016/202359 betrifft das Gebiet der Klebstoffe und insbesondere das Gebiet der feuchtigkeitshärtenden oder härtenden Klebstoffe. Die beschriebenen Klebstoffe bieten eine hohe Festigkeit für die Verklebung von Materialien wie Holz, Beton, Kunststoffen, Stein usw. und haben gleichzeitig eine hohe Feuchtigkeitsbeständigkeit. Beansprucht werden Klebstoffe umfassend modifizierte Polyether, Füllstoffe, Haftvermittler, und ferner eine oder mehrere Verbindungen, ausgewählt aus der Gruppe, bestehend aus einem Radikalfänger, einem Feuchtigkeitsfänger, einem Antioxidationsmittel, einem rheologischen Modifikator und einem Katalysator. Einer der bevorzugten Füllstoffe ist Neuburger Silikaterde.

Konkret betrifft die vorliegende Erfindung entsprechend eine thermoplastische Polyamid-Formmasse bestehend aus:
(A) 20 - 89.9 Gewichtsprozent wenigstens eines Polyamids;
(B) 10 - 55 Gewichtsprozent mineralischer Füllstoff, bestehend aus einer Mischung aus 45 bis 70 Gew.-% (krypto) kristalliner Kieselsäure (B1), 5 bis 15 Gew.-% amorpher Kieselsäure (B2) und 20 bis 40 Gew.-% kalziniertem Kaolin (B3), jeweils bezogen auf 100 Gew.-% (B), wobei die Komponente (B) einen Aluminiumoxid-Gehalt von 5 - 20 Gew.-%, und einen Siliciumoxid-Gehalt von 80 - 95 Gew.-%, bezogen auf 100 % (B) aufweist;
(C) 0 - 15 Gew.-% Glas- und/oder Kohlenstofffasern;
(D) 0.1 - 5.0 Gewichtsprozent schwarze Farbmittel;
(E) 0 - 5.0 Gewichtsprozent Additive;
wobei die Summe gebildet aus den Komponenten (A) bis (E) 100 % der thermoplastischen Polyamid-Formmasse ergibt.

Der Bezug der einzelnen Konzentrationsbereiche der Komponenten (A) bis (E), auf die Summe der Komponenten (A) bis (E) oder auf die Formmasse sind im Rahmen dieser Erfindung als gleichwertig anzusehen.

Im Sinne der vorliegenden Erfindung wird unter dem Begriff "Polyamid" (Abkürzung PA) ein Oberbegriff verstanden, welcher Homopolyamide und Copolyamide umfasst. Die gewählten Schreibweisen und Abkürzungen für Polyamide und deren Monomere entsprechen den in der ISO-Norm 16396-1 (2015(D)) festgelegten. Die darin verwendeten Abkürzungen werden im folgenden Synonym zu den IUPAC Namen der Monomere verwendet, insbesondere kommen folgende Abkürzungen für Monomere vor: BAC für Bis(aminomethyl)cyclohexan, wobei davon 1,3-Bis(aminomethyl)cyclohexan (1,3-BAC) und 1,4-Bis(aminomethyl)cyclohexan (1,4-BAC) erfasst seien, MACM für Bis(4-amino-3-methyl-cyclohexyl)methan (auch als 3,3'-Dimethyl-4,4'-diaminodicyclohexylmethan bezeichnet, CAS-Nr. 6864-37-5), PACM für Bis(4-amino-cyclohexyl)methan (auch als 4,4'-Diaminodicyclohexylmethan bezeichnet, CAS-Nr. 1761-71-3), TMDC für Bis(4-amino-3,5-dimethyl-cyclohexyl)methan (auch als 3,3',5,5'-Tetramethyl-4,4'-diaminodicyclohexylmethan bezeichnet, CAS-Nr. 65962-45-0), T für Terephthalsäure (CAS-Nr. 100-21-0), I für Isophthalsäure (CAS-Nr. 121-95-5).

Amorphe Polyamide weisen verglichen mit den teilkristallinen Polyamiden keine oder nur eine sehr geringe, kaum nachweisbare Schmelzwärme, auf. Die amorphen Polyamide zeigen in der dynamischen Differenz-Kalorimetrie (engl. Differential Scanning Calorimetry, DSC) nach ISO 11357 (2013) bei einer Aufheizrate von 20 K/min bevorzugt eine Schmelzwärme von maximal 5 J/g, besonders bevorzugt von maximal 3 J/g, ganz besonders bevorzugt von 0 bis 1 J/g. Amorphe Polyamide besitzen auf Grund ihrer Amorphizität keinen Schmelzpunkt.

Im Sinne der Erfindung sind teilkristalline Polyamide solche Polyamide, die in der dynamischen Differenz-Kalorimetrie (engl. Differential Scanning Calorimetry, DSC) nach ISO 11357 (2013) bei einer Aufheizrate von 20 K/min bevorzugt eine Schmelzwärme von mehr als 5 J/g, besonders bevorzugt von wenigstens 25 J/g, ganz besonders bevorzugt von wenigstens 30 J/g aufweisen.

Die Beschreibung des Farbeindrucks der erfindungsgemäss eingefärbten Formmassen und daraus hergestellter Formkörper kann über das CIE-Normfarbsystem erfolgen. Die DIN EN ISO 11664-2020 (Teile 1 bis 4) legt Spektralwertfunktionen zur Anwendung in der Farbmetrik fest und beschreibt die entsprechenden Farbmessungen. Die Messung erfolgt als Verhältnis von Reflexion oder Transmission eines Probenkörpers relativ zu einem Referenzstandard (= Weißstandard) und ist dadurch lichtquellenunabhängig. Aus den Spektraldaten lassen sich mit den tabellierten Normfarbwerten die Werte L*, a* und b* bestimmen. Die Auswertung des reflektierten oder transmittierten Lichtes erfolgt mittels einem "Monochromator"-System, bestehend aus einem optischen Beugungsgitter (Prisma), welches das Licht aufspaltet und auf ein Photo-Diodenarray abbildet. Die Interaktion der Materialoberfläche mit dem Licht (Reflexion) kann je nach Beschaffenheit der Oberfläche gerichtet oder diffus erfolgen. Streulicht führt dazu, dass eine dunkle Oberfläche in der Betrachtung aufgehellt erscheint. Die Berücksichtigung erfolgt mittels gebräuchlicher Kugelgeometrien. Durch Verwendung der nachfolgenden Messmodi kann der Glanz ein- oder ausgeschlossen werden:
Messmodus A: Reflexion, Messgeometrie: D/8°, Lichtart: D 65 10, Glanz: eingeschlossen, Kalibrierung: UV-kalibriert, Messblende: SAV;
Messmodus B: Reflexion, Messgeometrie: D/8°, Lichtart: D 65 10, Glanz: ausgeschlossen, Kalibrierung: UV-kalibriert, Messblende: SAV.

Die Begriff Glanzausschluss im Zusammenhang mit der Luminanz-Messung oder den Luminanz-Werten ist als gleichwertig anzusehen zu folgenden Formulierungen: Glanz ausgeschlossen, Messung ohne Glanz, Messung ohne Glanzanteil, ohne Glanz.

Die Begriff Glanzeinschluss im Zusammenhang mit der Luminanz-Messung oder den Luminanz-Werten ist als gleichwertig anzusehen zu folgenden Formulierungen: Glanz eingeschlossen, Messung mit Glanz, Messung mit Glanzanteil, mit Glanz.

Der Einsatz der erfindungsgemässen mineralischen Füllstoffe (B) ermöglicht die Herstellung von eingefärbten, mineralgefüllten thermoplastischen Formmassen, die einen tiefschwarzen Farbeindruck zeigen. Im Farbraum nach CIELAB gemäß DIN EN ISO 11664-2020 werden bei Messung ohne Glanzanteil L*-Werte von höchstens 12, vorzugsweise von höchstens 8, besonders bevorzugt von höchstens 6 erzielt. Bei Messung mit Glanzanteil werden L*-Werte von höchstens 30, vorzugsweise von höchstens 28, besonders bevorzugt von höchstens 27 erzielt.

Gemäss einer ersten bevorzugten Ausführungsform ist die Formmasse dadurch gekennzeichnet, dass die **Komponente (A)** in einem Anteil von 28 bis 84.9 Gewichtsprozent, vorzugsweise im Bereich von 50 bis 79.8 Gewichtsprozent in der Formmasse vorliegt.

In einer bevorzugten Ausführungsform kann Komponente (A) ausschliesslich aus den teilkristallinen Polyamiden (A1) bestehen. Bei den Polyamiden (A1) handelt es sich um aliphatische teilkristalline Polyamide auf Basis von aliphatischen Dicarbonsäuren und aliphatischen Diaminen und/oder um teilaromatische teilkristalline Polyamide auf Basis von Dicarbonsäuren und Diaminen, wobei die Disäuren oder die Diamine aromatische Struktureinheiten beinhalten.

In einer weiteren bevorzugten Ausführungsform kann Komponente (A) aus einer Mischung der teilkristallinen Polyamide (A1) und der amorphen Polyamide (A2) bestehen. Dabei besteht die Komponente (A) bevorzugt aus folgenden Komponenten:
(A1) 20-100 Gewichtsprozent, vorzugsweise 40-85 Gewichtsprozent wenigstens eines aliphatischen teilkristallinen Polyamids auf Basis von aliphatischen Dicarbonsäuren und aliphatischen Diaminen und/oder wenigstens eines teilaromatischen teilkristallinen Polyamids auf Basis von Dicarbonsäuren und Diaminen;
(A2) 0-80 Gewichtsprozent, vorzugsweise 15-60 Gewichtsprozent wenigstens eines amorphen Polyamids,
wobei sich die Gewichtsprozent der Komponenten (A1) und (A2) auf 100 Gewichtsprozent der Komponente (A) ergänzen.

Bevorzugt sind die Polyamide der Komponente (A1) und (A2) vom Typ AABB, d. h. aufgebaut aus Dicarbonsäuren und Diaminen, wobei zusätzlich auch noch in einem untergeordneten Anteil Lactame und Aminosäuren als Bauteile vorhanden sein können.

Als Diamine für Komponente (A1) kommen z.B. folgende Monomere in Frage: 1,4-Butandiamin, 2-Methyl-1,5-pentandiamin, 2-Butyl-2-ethyl-1,5-pentandiamin, 1,6-Hexandiamin, 2,2,4-Trimethylhexamethylendiamin, 2,4,4-Trimethylhexamethylendiamin, 1,7-Heptandiamin, 1,8-Octandiamin, 2-Methyl-1,8-octandiamin, 1,9-Nonandiamin, 1,10-Decandiamin, 1,11-Undecandiamin, 1,12-Dodecandiamin, 1,13-Tridecandiamin, 1,14-Tetradecandiamin, 1,3-Bis-(aminomethyl)cyclohexan, 1,4-Bis-(aminomethyl)cyclohexan, m-Xylylendiamin und p-Xylylendiamin, wobei 1,6-Hexandiamin, 1,10-Decandiamin, 1,12-Dodecandiamin und 1,3-Bis-(aminomethyl)cyclohexan bevorzugt werden.

Als Dicarbonsäuren für Komponente (A1) kommen z.B. folgende Monomere in Frage: Adipinsäure, Korksäure, Azelainsäure, Sebazinsäure, Undecandisäure, Dodecandisäure, Tridecandisäure, Tetradecandisäure, Pentadecandisäure, Hexadecandisäure, Heptadecandisäure, Oktadecandisäure, C36-Dimerfettsäure, cis- und/oder trans-Cyclohexan-1,4-dicarbonsäure und/oder cis- und/oder trans-Cyolohexan-1,3-dicarbonsäure, Terephthalsäure, Isophthalsäure, Naphthalindicarbonsäure, insbesondere 1,5-Naphthalindicarbonsäure und 2,6-Naphthalindicarbonsäure, und Gemische daraus. Bevorzugt werden Adipinsäure, Sebazinsäure, Tetradecandisäure, Hexadecandisäure, und Dodecandisäure.

Weiterhin können die Polyamide (A1) und (A2) auch Lactame oder Aminocarbonsäuren, insbesondere α,ω-Aminosäuren oder Lactame mit 6 bis 12 Kohlenstoffatomen enthalten, wobei beispielhaft nachfolgende Auswahl genannt sei: m-Aminobenzoesäure, p-Aminobenzoesäure Caprolactam (CL), α,ω-Aminocapronsäure, α,ω-Aminoheptansäure, α,ω-Aminooctansäure, α,ω-Aminononansäure, α,ω-Aminodecansäure, α,ω-Aminoundecansäure (AUA), Laurinlactam (LL) und α,ω-Aminododecansäure (ADA). Besonders bevorzugt sind Caprolactam, Aminocapronsäure, α,ω-Aminoundecansäure, Laurinlactam und α,ω-Aminododecansäure. Der Anteil dieser Lactame respektive Aminosäuren liegt aber bevorzugt bei weniger als 50 Gewichtsprozent bezogen auf die Gesamtmasse des Polyamides (A1), insbesondere bevorzugt bei weniger als 20 Gewichtsprozent, besonders bevorzugt bei weniger als zehn Gewichtsprozent.

### Bevorzugt sind die Polyamide der Komponente (A1)

teilkristalline aliphatische Polyamide ausgewählt aus der Gruppe bestehend aus: PA 6, 46, 56, 66, 66/BAC6, 66/6, 69, 610, 612, 614, 616, 618, 810, 1010, 1012, 1212, 11, 12, 6/12, 66/6/610, wobei 66, 66/BAC6 und 610 bevorzugt sind und 66/BAC6, wobei BAC gleich 1,3-BAC ist, besonders bevorzugt ist,
und/oder teilkristalline teilaromatische Polyamide ausgewählt aus der Gruppe bestehend aus: PA 6T/6I, 6T/66, 6T/6I/66, 6T/610, 6T/612, 6T/614, 6T/616, 9T, 9MT (M=2-Methyloctan-1,8-diamin), 10T, 11T, 10T/6T, 11T/6T, 12T, 10T/6T, 11/10T, 12/10T, 11/9T, 12/9T, 10T/1010, 10T/612, wobei der Anteil an Terephthalsäure bezogen auf den gesamten Gehalt an Dicarbonsäuren, bevorzugt mehr als 50 mol-%, insbesondere bevorzugt mehr als 55 mol-% ausmacht,
und/oder teilkristalline Polyamide, die über einen Schmelzpunkt von wenigstens 170 °C, vorzugsweise im Bereich von 175-340 °C oder, vorzugsweise wenn aliphatisch, im Bereich von 175 - 265 °C verfügen.

Ganz besonders bevorzugt ist Polyamid 66/BAC6 als Komponente (A1) mit einem Molverhältnis 66:BAC6 von 75:25 bis 55:45, insbesondere von 70:30 bis 60:40, wobei BAC bevorzugt 1,3-Bis(aminomethyl)cyclohexan (1,3-BAC) ist.

Weiterhin verfügen die Polyamide der Komponente (A), (A1) und (A2), bevorzugt über eine relative Viskosität gemessen in m-Kresol (0.5 g Polymer in 100 ml m-Kresol, 20 °C) gemäss ISO 307 (2007) im Bereich von 1.4 bis 3.0, besonders bevorzugt im Bereich von 1.45 bis 2.70, insbesondere bevorzugt im Bereich von 1.50 bis 2.40.

Die Polyamide der Komponente (A2) sind bevorzugt
ausgewählt aus der Gruppe bestehend aus den amorphen Polyamiden 12/MACMT, MACM10, MACM12, MACM14, MACM16, MACM18, MACMI/12, PACM10, PACM12, PACM14, PACM16, PACM18, PACMI/12, TMDC10, TMDC12, TMDC16, TMDC18, MACMT/MACMI/12, PACMT/PACMI/12, oder Mischungen davon,
und/oder ausgewählt aus der Gruppe bestehend aus den amorphen Polyamiden MXDI, MXDI/6I, MXD6/MXDI, 6I, 6/6I, 6T/6I, 10T/10I, 3-6T (3-6 = 2,2,4- bzw. 2,4,4-Trimethylhexandiamin) oder Mischungen davon, wobei die Systeme 6T/6I oder 10T/10I einen Anteil von weniger als 50 Mol-% 6T- bzw. 10T-Einheiten aufweisen, und wobei ein Zusammensetzungsbereich 6T:6I bzw. 10T/10I von 20:80 bis 45:55, insbesondere 25:75 bis 40:60 bevorzugt wird,
und/oder amorphe Polyamide, die über eine Glasübergangstemperatur (Tg) oberhalb von 90 °C, besonders bevorzugt oberhalb von 110 °C, insbesondere bevorzugt oberhalb von 120 °C verfügen.

Die Diamine für die amorphen Polyamide der Komponente (A2) sind dabei bevorzugt ausgewählt aus der Gruppe bestehend aus 1,6-Diaminhexan, 1,10-Diaminodekan, 1,12-Diaminododekan, Bis-(4-amino-3-methyl-cyclohexyl)-methan (MACM), Bis-(4-aminocyclohexyl)-methan (PACM), Bis-(4-amino-3-ethyl-cyclohexyl)-methan (EACM), Bis-(4-amino-3,5-dimethyl-cyclohexyl)-methan (TMDC), 2,6-Norbornandiamin (2,6-Bis-(aminomethyl)-norbornan), 1,3-Diaminocyclohexan, 1,4-Diaminocyclohexan, Isophorondiamin, 1,3-Bis-(aminomethyl)cyclohexan, 1,4-Bis-(aminomethyl)cyclohexan, 2,2-(4,4'-Diaminodicyclohexyl)propan, meta-Xylylendiamin, para-Xylylendiamin und Mischungen daraus. Besonders bevorzugt sind die Diamine ausgewählt aus der Gruppe bestehend aus Hexan-1,6-diamin, Decan-1,10-diamin, Bis-(4-amino-3-methyl-cyclohexyl)-methan (MACM) und Bis(4-amino-cyclohexyl)methan (PACM) und Mischungen hiervon. Dicarbonsäuren für die Polyamide (A2) sind bevorzugt ausgewählt aus der Gruppe bestehend aus Terephthalsäure, Isophthalsäure, Naphthalindicarbonsäuren (NDA), insbesondere 1,5-Naphthalindicarbonsäure und 2,6-Naphthalindicarbonsäure, 1,6-Hexandisäure (Adipinsäure), 1,9-Nonandisäure, 1,10-Decandisäure, 1,11-Undecandisäure, 1,12-Dodecandisäure, 1,13-Tridecandisäure, 1,14-Tetradecandisäure, 1,16-Hexadecandisäure, 1,18-Octadecandisäure, und Mischungen daraus. Besonders bevorzugt sind 1,6-Hexandisäure, 1,10-Decandisäure, 1,12-Dodecandisäure, Terephthalsäure, Isophthalsäure und Mischungen hiervon. Weiterhin sind Capro- und Laurinlactam bevorzugte Monomere für die Herstellung der Polyamide der Komponente (A2).

Erfindungsgemäss verfügt die Formmasse neben der Polyamid-Matrix über einen bestimmten Anteil eines mineralischen Füllstoffs als **Komponente (B)**. Bevorzugt liegt der Anteil der Komponente (B) im Bereich von 15 - 50 Gewichtsprozent, vorzugsweise im Bereich von 20 - 45 Gewichtsprozent in der Formmasse.

Überraschenderweise besonders geeignet als Komponente (B) ist ein natürlich vorkommender mineralischer Füllstoff, welcher aus einen Gemisch korpuskularer, (krypto)kristalliner und amorpher Kieselsäure und kalziniertem lamellarem Kaolin besteht. Das Mineralgemisch stellt ein loses, kristallines Haufwerk dar, das durch physikalische Methoden nicht zu trennen ist. Der Kieselsäureanteil weist eine runde Kornform auf und besteht aus ca. 200 nm grossen, aggregierten kryptokristallinen Primärpartikeln, die mit amorpher Kieselsäure opalartig überzogen sind. Durch diese Struktur ergeben sich die relativ hohe spezifische Oberfläche und Ölzahl.

Als Komponente (B) enthalten die erfindungsgemäßen Formmassen 10 bis 55, vorzugsweise 15 bis 50 und besonders bevorzugt 20 bis 45 Gew.-% eines mineralischen Füllstoffes aufgebaut aus einer Mischung aus im Wesentlichen (krypto) kristalliner (B1) und amorpher Kieselsäure (B2) und kalziniertem Kaolin (B3).

Der mineralische Füllstoff (B) enthält eine Mischung aus 45 bis 70, vorzugsweise 53 bis 65 Gewichtsprozent (B1) mit 5 bis 15, vorzugsweise 7 bis 12 Gewichtsprozent (B2) und 20 bis 40, vorzugsweise 25 bis 35 Gew.-% (B3), bezogen auf 100 Gewichtsprozent (B).

Dabei weist die Komponente (B) einen Aluminiumoxid-Gehalt von 5 bis 20 Gewichtsprozent vorzugsweise 7 bis 17 und insbesondere 8 bis 15 Gewichtsprozent, bezogen auf 100 Gewichtsprozent (B), auf. Zudem weist die Komponente (B) einen Siliciumdioxid-Gehalt von 80 bis 95 Gewichtsprozent, vorzugsweise 83 bis 93 und insbesondere 85 bis 92 Gewichtsprozent, bezogen auf 100 Gewichtsprozent (B) auf. Sowohl der Siliciumoxid als auch der Aluminiumoxid-Gehalt können mittels RFA (Röntgenfluoreszenzanalyse) gemäß DIN 51001 bestimmt werden.

In einer bevorzugten Ausführungsform handelt es sich bei Komponente (B) um einen mineralischen Füllstoff, bestehend aus einer Mischung aus 45 bis 70 Gew.-% (krypto) kristalliner Kieselsäure (B1), 5 bis 15 Gew.-% amorpher Kieselsäure (B2) und 20 bis 40 Gew.-% kalziniertem Kaolin (B3), jeweils bezogen auf 100 Gew.-% (B), wobei die Komponente (B) einen Aluminiumoxid-Gehalt von 5 - 20 Gew.-%, und einen Siliciumoxid-Gehalt von 80 - 95 Gew.-%, bezogen auf 100 % (B) aufweist.

Bevorzugte Komponenten (B) weisen eine spezifische BET Oberfläche gemäss DIN ISO 9277 von 5 bis 15, vorzugsweise 6 bis 10 m²/g auf und/oder eine Ölzahl gemäss DIN ISO 787 Teil 5 von 50 bis 60, vorzugsweise von 52 bis 58 g/100g auf.

Zur besseren Verträglichkeit mit der Polymermatrix kann der mineralische Füllstoff (B) oberflächlich behandelt sein, wobei bevorzugt Silanverbindungen, besonders bevorzugt Aminosilanverbindungen verwendet werden.

Bevorzugte Silanverbindungen sind Trialkoxysilane, Dialkoxysilane, Epoxysilane, Vinylsilane, (Meth)acryloxysilane, Aminosilane und Mercaptosilane.

Geeignete Vertreter dieser Silanverbindungen sind z.B. γ-Glycidoxypropylmethyldimethoxysilan, γ-Glycidoxypropylmethyldiethoxysilan, Vinylmethyldimethoxy-silan, Vinylmethyldiethoxysilan, γ-(Meth)acryloxypropylmethyldimethoxysilan, γ-(Meth)acryloxypropylmethyldiethoxysilan, ((Meth)acryloxymethyl)methyldimethoxy-silan, γ-Aminopropylmethyldiethoxysilan, N-β-(Aminoethyl)-γ-aminopropylmethyl-dimethoxysilan, N-β-(Aminoethyl)-γ-aminopropyl-methyldimethoxysilan, N-β-(Aminoethyl)-γ-aminoisobutylmethyldimethoxysilan, γ-Aminopropylmethyldi-methoxysilan, N-β-(Aminoethyl)-γ-aminopropyl-methyldiethoxysilan, 3-Mercaptopropylmethyldimethoxysilan, γ-Aminopropylmethyldiethoxysilan, N-β-(Aminoethyl)-γ-aminopropylmethyl-dimethoxysilan, N-β-(Aminoethyl)-γ-amino-propylmethyldimethoxysilan, N-β-(Aminoethyl)-γ-aminoisobutylmethyldimethoxy-silan, γ-Aminopropylmethyl-dimethoxysilan, N- β-(Aminoethyl)-γ-aminopropyl-methyldiethoxysilan, γ-Aminopropyltriethoxysilan, γ-Aminopropyl-trimethoxysilan, N-β-(Aminoethyl)-γ-aminopropyl-trimethoxysilan, N-β-(Amino-ethyl)-γ-aminopropyl-triethoxysilan, Diethylentriaminopropyltrimethoxysilan, Bis-(γ-trimethoxy-silylpropyl)amin, N-Phenyl-γ-aminopropyltrimethoxysilan, γ-Amino-3,3-dimethylbutyltrimethoxysilan, γ-Aminobutyltriethoxysilan, Polyazamidsilan.

Besonders bevorzugte Silanverbindungen sind primäre und sekundäre AminosilanVerbindungen, wie z.B. Aminopropyltrimethoxysilan, Aminobutyltri-methoxysilan, Aminopropyltriethoxysilan, Aminobutyltriethoxysilan, Bis(3-triethoxysilylpropyl)amin und N-[3-(Trimethoxysilyl)-propyl]-ethylendiamin.

Insbesondere bevorzugt werden sekundäre Aminosilane, wobei Bis(3-triethoxysilylpropyl)amin und N-[3-(Trimethoxysilyl)-propyl]-ethylendiamin besonders bevorzugt sind.

Die Silanverbindungen werden im Allgemeinen in Mengen von 0.01 bis 2, vorzugsweise 0.025 bis 1.0 und insbesondere 0.05 bis 0.5 Gew.-%, jeweils bezogen auf Komponente (B), zur Oberflächenbeschichtung eingesetzt.

Besonders bevorzugt ist der erfindungsgemässe mineralische Füllstoff (B) mit einem primären und/oder sekundären Aminosilan, insbesondere bevorzugt mit einem sekundären Aminosilan, oberflächenbeschichtet, wobei die Menge des primären und/oder sekundären Aminosilans 0.01 bis 2.0 Gew.-%, vorzugsweise 0.025 bis 1.0 Gew.-%, bezogen auf Komponente (B), beträgt.

In einer bevorzugten Ausführungsform handelt es sich bei Komponente (B) um einen mineralischen Füllstoff, bestehend aus einer Mischung aus 45 bis 70 Gew.-% (krypto) kristalliner Kieselsäure (B1), 5 bis 15 Gew.-% amorpher Kieselsäure (B2) und 20 bis 40 Gew.-% kalziniertem Kaolin (B3), jeweils bezogen auf 100 Gew.-% (B), wobei die Komponente (B) einen Aluminiumoxid-Gehalt von 5 - 20 Gew.-%, und einen Siliciumoxid-Gehalt von 80 - 95 Gew.-%, bezogen auf 100 % (B) aufweist und wobei der mineralische Füllstoff (B) mit einem primären und/oder sekundären Aminosilan, insbesondere bevorzugt mit einem sekundären Aminosilan, oberflächenbeschichtet ist, wobei die Menge des primären und/oder sekundären Aminosilans 0.01 bis 2.0 Gew.-%, vorzugsweise 0.025 bis 1.0 Gew.-%, bezogen auf Komponente (B), beträgt.

Die erfindungsgemässe Polyamid-Formmasse kann als **Komponente (C)** noch Verstärkungsfasern, insbesondere Glas- und/oder Kohlenstofffasern enthalten. Komponente (C) ist zu 0 bis 15 Gew.-%, bezogen auf die Summe der Komponenten (A) bis (E), in der Formmasse enthalten. Besonders bevorzugt ist die Formmasse frei an Komponente (C), d.h. in dieser bevorzugten Ausführungsform enthält die erfindungsgemässe Formmasse keine Verstärkungsfasern, also keine Glas- und/oder Kohlenstofffasern.

Die Verstärkungsfasern können als Schnittfasern (geschnittene Fasern) oder als Endlosfasern (Roving) vorliegen. Bevorzugt ist die Verstärkungsfaser C eine Glasfaser.

Geeignete Glasfasern weisen einen Durchmesser von 6 bis 20 µm, bevorzugt von 6 bis 17 µm, besonders bevorzugt von 6 bis 13 µm, ganz besonders bevorzugt von 7 bis 12 µm auf. Die Glasfasern können aus allen Glassorten, wie z.B. D-, E-, ECR-, L-, S-, R-Glas, oder beliebigen Mischungen davon bestehen. Bevorzugt sind Glasfasern aus E-Glas, ECR-Glas oder S-Glas oder aus Mischungen dieser Fasern.

Geeignete Glasfasern besitzen eine Querschnittsfläche, die entweder kreisförmig oder nicht-kreisförmig sein kann, wobei im letzteren Fall das Abmessungsverhältnis von der Haupt-Querschnittsachse zur Neben-Querschnittsachse mindestens 2 ist, bevorzugt im Bereich von 2 bis 5 liegt.

Die Verstärkungsfasern, insbesondere die Glasfasern können mit einer für Thermoplaste, insbesondere für Polyamid geeigneten Schlichte, enthaltend einen Haftvermittler auf Basis einer Amino- oder Epoxysilanverbindung, versehen sein.

Zusätzlich enthält die vorgeschlagene Formmasse neben dem Polyamid und dem erfindungsgemässen mineralischen Füllstoff mindestens ein schwarzes Farbmittel zur Einfärbung der Formmasse und zwar als **Komponente (D)**. Die Komponente (D) liegt bevorzugt in einem Anteil im Bereich von 0.1 - 3.0 Gewichtsprozent, vorzugsweise im Bereich von 0.1 - 2.0 Gewichtsprozent in der Formmasse vor.

Bei Komponente (D) handelt es sich um Farbmittel oder Mischungen von Farbmitteln, die geeignet sind die Polyamid-Formmasse dunkel bzw. schwarz einzufärben. Farbmittel können organisch oder anorganisch, Farbstoffe oder Pigmente sein. Farbstoffe sind Farbmittel, die normalerweise kein Licht streuen, sondern sie absorbieren Licht bei einer bestimmten sichtbaren Wellenlänge. Farbstoffe sind oft in einer bestimmten Konzentration in der Polymermatrix löslich. Pigmente sind organische oder anorganische Farbstoffe, die in der Regel als diskrete, in der Polymermatrix unlösliche Teilchen vorliegen.

Erfindungsgemäss werden Farbmittel in Mengen und in Kombinationen eingesetzt, die ausreichen, um die Formmassen dunkel und undurchsichtig zu machen, und insbesondere, um die unten beschriebenen Farbhelligkeitswerte (L*, Luminanz) zu erzielen. Die spezifische Menge eines verwendeten Farbmittels hängt unter anderem von seiner Löslichkeit und seinem Extinktionskoeffizienten in der thermoplastischen Matrix ab und davon, ob es in Kombination mit einem oder mehreren zusätzlichen Farbmitteln verwendet wird.

Geeignete Farbmittel weisen im Allgemeinen hohe Extinktionskoeffizienten im sichtbaren Wellenlängenbereich und eine hohe thermische Stabilität auf. Eine hohe thermische Stabilität der Farbmittel liegt dann vor, wenn keine signifikante Farbverschiebung oder thermischer Abbau bei der Herstellung und Verarbeitung der eingefärbten Formmassen durch Spritzguss oder Extrusion im Temperaturbereich zwischen 230 und 300 °C beobachtet werden. Darüber hinaus sollten die Farbmittel das Polymer nicht angreifen oder abbauen, was zu einem inakzeptablen Verlust der mechanischen Eigenschaften oder zur Bildung von gasförmigen Nebenprodukten während des Formens führen kann.

Im Rahmen dieser Erfindung kann sich das schwarze Farbmittel auch aus einer Mischung von nicht schwarzen, also farbigen Pigmenten oder Farbstoffen ableiten, wenn die Mischung dieser einzelnen Farbmittel (Farbstoffe oder Pigmente) insgesamt eine schwarze Farbe ergeben bzw, eine Schwarzeinfärbung der Formmasse erlauben.

Zu den als Komponente (D) vorzugsweise einsetzbaren Farbmittel (Farbstoffe und Pigmente) zählen Russ, Graphit, Graphen, Nigrosine, schwarze Farbpigmente oder Farbstoffe sowie Kombinationen komplementärfarbiger Pigmente oder Farbstoffe, die in Mischung eine schwarze Einfärbung erlauben, oder Mischungen von ein oder mehreren dieser Farbmittel.

Besonders bevorzugt für Kombinationen komplementärfarbiger Pigmente oder Farbstoffe werden die Farbmittel ausgewählt aus der Gruppe der folgenden Farbstoff-Mischungen (angegeben als Color Index Generic Names (CIGN)):
- Solvent Green 3 und Solvent Red 179
- Solvent Red 52 und Solvent Blue 97
- Solvent Green 3, Solvent Blue 97 und Solvent Red 179.

Ganz besonders bevorzugt wird als Farbmittel eine Mischung (D) aus den folgenden Komponenten (angegeben als Color Index Generic Names (CIGN)):
(D1) 20 - 40 Gew.-% Solvent Green 3
(D2) 10 - 30 Gew.-% Solvent Blue 97
(D3) 40 - 70 Gew.-% Solvent Red 179
wobei die Summe der Komponenten (D1) bis (D3) 100 Gew.-% der Mischung (D) ergibt. Bevorzugt beträgt der Gehalt dieser Farbmittel-Mischung D 0.15 bis 0.25 Gew.-% bezogen auf die Summe der Komponenten (A) bis (E).

Ein weiteres bevorzugtes Farbmittel ist Russ (Carbon Black). Russ auch als Industrieruss bezeichnet, ist eine Modifikation des Kohlenstoffs mit hohem Oberfläche-zu-VolumenVerhältnis und besteht zu 80 bis 99,5 Gew.-% aus Kohlenstoff. Die spezifische Oberfläche von Industrieruss beträgt etwa 10 bis 1500 m²/g (BET). Der Russ kann als Gasruss, Furnaceruss, Flammruss, Spaltruss oder Acetylenruss hergestellt sein. Der Korndurchmesser liegt im Bereich von 8 bis 500 nm, typischerweise 8 bis 110 nm. Russ wird auch als Pigment Black 7 oder Lamp Black 6 bezeichnet. Farbrusse sind nanoteilige Russe, die durch ihre Feinheit zunehmend den braunen Grundton üblicher Russe verlieren.

Weiterhin als Farbmittel können folgende schwarze Farbpigmente eingesetzt werden: Eisenoxidschwarz (Fe₃O₄), Spinellschwarz (Cu(Cr,Fe)₂O₄), Manganschwarz (Mischung aus Mangandioxid, Siliciumdioxid und Eisenoxid), Kobaltschwarz und Antimonschwarz.

Zur Schwarzfärbung kann auch Nigrosin eingesetzt werden. Bei den Nigrosinen handelt es sich im Allgemeinen um eine mit den Indulinen verwandte Gruppe blauer, schwarzer oder grauer Phenazinfarbstoffe (Azinfarbstoffe) in verschiedenen Formen (wasserlöslich, öllöslich, alkohollöslich). Die Synthese des Nigrosinfarbstoffs kann z. B. durch Oxidation und dehydratisierender Kondensation von Anilin, Anilinhydrochlorid und Nitrobenzol durch Erhitzen in Gegenwart von metallischem Eisen oder Kupfer und Metallsalzen wie Eisenchlorid (FeCl₃) bei einer Reaktionstemperatur von 160 bis 180° C erfolgen. Nigrosin wird als Gemisch verschiedener Verbindungen hergestellt, je nach Reaktionsbedingungen, eingesetzten Rohstoffen, Ladungsverhältnis und dergleichen; so wird beispielsweise postuliert, dass Nigrosin ein Gemisch aus verschiedenen Triphenazinoxazinen und Phenazinazinverbindungen sein kann. Nigrosine können in Form der freien Base oder in Form eines Salzes (z. B. Hydrochlorid) verwendet werden.

Als Nigrosin der vorliegenden Erfindung kann die schwarze Azinreihenmischung verwendet werden, die im COLOR INDEX als C.I. Acid Black 2, C.I. SOLVENT BLACK 5, C.I. SOLVENT BLACK 5:1, C.I. SOLVENT BLACK 5:2 und C.I. SOLVENT BLACK 7 beschrieben ist (C.I. Generic Names gemäss der dritten Ausgabe des COLOUR INDEX).

Beispiele für im Handel erhältliche Nigrosinfarbstoffe sind Spirit Black SB, Spirit Black SSBB, Spirit Black AB (alle sind unter C.I. SOLVENT BLACK 5 kategorisiert); Nigrosin Base SA, Nigrosin Base SAP, Nigrosin Base SAP-L, Nigrosin Base EE, Nigrosin Base EE-L, Nigrosin Base EX, Nigrosin Base EX- BP (alle werden unter C.I. SOLVENT BLACK 7 eingeordnet), alle sind Produkte von Orient Chemical Industries, Ltd. Vorzugsweise wird C. I. SOLVENT BLACK 7 (CAS-Nr. 8005-02-5) verwendet.

Die genannten Farbmittel können in die erfindungsgemässe Formmasse als Masterbatch oder Konzentrat eingebracht werden, vorzugsweise auf Basis von Polyamiden (A), vorzugsweise Polyamiden (A1), wobei der Gehalt an Farbmittel vorzugsweise im Bereich von 20 bis 50 Gew.-% liegt. Als Basis dieser Masterbatches werden bevorzugt die aliphatischen Polyamide PA6, PA66, PA66/BAC6, PA610, PA6/12, PA12 oder Mischungen davon eingesetzt.

Bevorzugt als Komponente (D) eingesetzt werden schwarze Farbmittel, die ausgewählt werden aus der Gruppe Russ, Graphit, Graphen, Nigrosine, schwarze Farbpigmente, schwarze Farbstoffe oder Kombinationen komplementärfarbiger Pigmente und/oder Farbstoffe oder Mischungen von ein oder mehreren dieser Farbmittel.

Bevorzug werden die erfindungsgemässen Polyamid-Formmassen derart mit Farbmitteln (Komponente D) versehen, dass die im CIE-LAB Lichtraum gemessene Farbhelligkeit L* (Luminanz) maximal 28, besonders bevorzugt maximal 27 ist, falls der Glanz eingeschossen ist, und die Farbhelligkeit L* maximal 8, besonders bevorzugt maximal 6 ist, wenn der Glanz ausgeschlossen ist.

Zu guter Letzt kann die vorgeschlagene Formmasse auch noch Additive als **Komponente (E)** enthalten. Die Komponente (E), welche verschieden von den Komponenten A bis D ist, liegt bevorzugt in einem Anteil im Bereich von 0 bis 4.0 Gewichtsprozent, vorzugsweise 0.1 bis 3.0 Gewichtsprozent in der Formmasse vor.

Die Additive der Komponente (E) können ausgewählt sein aus der Gruppe bestehend aus: Stabilisatoren, Alterungsschutzmittel, Antioxidantien, Antiozonantien, Lichtschutzmittel, UV-Stabilisatoren, UV-Absorber, UV-Blocker, anorganische Hitzestabilisatore, insbesondere auf Basis von Kupferhalogeniden und Alkalihalogeniden, organische Hitzestabilisatoren, Leitfähigkeitsadditive, Verarbeitungshilfsmittel, Nukleierungsmittel, Kristallisationsbeschleuniger, Kristallisationsverzögerer, Fliesshilfsmittel, Gleitmittel, Entformungsmittel, Weichmacher, Markierungsstoffe und Mischungen hiervon.

Die erfindungsgemässe Formmasse enthält als Komponente (E) bevorzugt mindestens einen Stabilisator ausgewählt aus der Gruppe anorganische und organische Stabilisatoren, insbesondere Antioxidantien, Antiozonantien, Hitzestabilisatoren, Lichtschutzmitteln, UV-Stabilisatoren, UV-Absorbern oder UV-Blockern. Bevorzugt ist der Stabilisator C ein UV- und/oder ein Hitzestabilisator.

Die Komponente (E) kann dabei gemäss einer bevorzugten Ausführungsform ausgewählt sein aus der folgenden Gruppe:
- Verbindungen des ein- oder zweiwertigen Kupfers, insbesondere Salze des ein- oder zweiwertigen Kupfers mit anorganischen oder organischen Säuren oder ein- oder zweiwertigen Phenolen, die Oxide des ein- oder zweiwertigen Kupfers, oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren, wobei besonders bevorzugt die einwertigen Kupferverbindungen CuCI, CuBr, Cul, CuCN und Cu2O, sowie die zweiwertigen Kupferverbindungen CuCl2, CuSO4, CuO, Kupfer(II)acetat oder Kupfer(II)stearat sind, oder Mischungen dieser Verbindungen, wobei diese Kupfer-Verbindungen als solche oder bevorzugtermassen in Form von Konzentraten eingesetzt werden. Dabei ist unter Konzentrat ein Polymer, vorzugsweise gleicher oder im Wesentlichen gleicher chemischer Natur wie Komponente A1 oder A2, zu verstehen, welches das Kupfersalz bzw. die Kupferverbindung in hoher Konzentration enthält. Insbesondere bevorzugt werden die Kupferverbindungen in Kombination mit weiteren Metallhalogeniden, einschliesslich Alkalihalogeniden, wie Nal, Kl, NaBr, KBr, eingesetzt, wobei das molare Verhältnis von Metallhalogenid zu Kupfer 0.5 bis 20, bevorzugt 1 bis 10 und besonders bevorzugt 2 bis 7 beträgt;
- Stabilisatoren auf Basis sekundärer aromatischer Amine;
- Stabilisatoren auf Basis sterisch gehinderter Phenole;
- Phosphiten und Phosphoniten,
- Stabilisatoren ausgewählt aus der Gruppe bestehend aus N,N'-Oxamide, Hydroxyphenyltriazine, Hydroxyphenylbenzotriazole, Dibenzoylmethane, Aminohydroxybenzoylbenzoesäureester, Hydroxybenzophenone, Hindered Amin Light Stabilizers (HALS), sowie
- Mischungen der vorstehend genannten Stabilisatoren.

Besonders bevorzugte Beispiele für erfindungsgemäss einsetzbare Stabilisatoren auf Basis sekundärer aromatischer Amine sind Addukte aus Phenylendiamin mit Aceton (Naugard A), Addukte aus Phenylendiamin mit Linolen, Naugard 445, N,N'-Dinaphthyl-p-phenylendiamin, N-Phenyl-N'-cyclohexyl-p-phenylendiamin oder Mischungen von zwei oder mehreren davon.

Bevorzugte Beispiele für erfindungsgemäss einsetzbare Stabilisatoren auf Basis sterisch gehinderter Phenole sind N,N'-Hexamethylen-bis-3-(3,5-di-tert-butyl-4-hydroxyphenyl)-propionamid, Bis-(3,3-bis-(4'-hydroxy-3'-tert-butylphenyl)-butansäure)-glykolester, 2,1'-Thioethylbis-(3-(3,5-di.tert-butyl-4-hydroxyphenyl)-propionat, 4-4'-Butyliden-bis-(3-methyl-6-tert.-butylphenol), Triethylenglykol-3-(3-tert-butyl-4-hydroxy-5-methylphenyl)-propionat oder Mischungen von zweien oder mehreren dieser Stabilisatoren.

Bevorzugte Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylphentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritoldiphosphit, TristearyIsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl-12-methyl-dibenz [d,g]-1,3,2-dioxaphosphocin, Bis(2,4-di-tert-butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenyl-phosphit und Tris(2,4-di-tert-butylphenyl)phosphit (Hostanox^{®} PAR24: Handelsprodukt der Firma Clariant, Basel).

Eine bevorzugte Ausführungsform des Wärmestabilisators besteht in der Kombination von Irgatec NC 66 (erhältlich von BASF) und einer Kupferstabilisierung auf Basis von Cul und Kl. Insbesondere bevorzugt wird eine Wärmestabilisierung ausschliesslich auf Basis von Cul und Kl.

Gemäss einer weiteren bevorzugten Ausführungsform sind die Hitzestabilisatoren der Komponente (E) ausgewählt aus der Gruppe der Phenol-basierten Hitzestabilisatoren, Phosphit-basierten Hitzestabilisatoren, Amin-basierten Hitzestabilisatoren, oder Mischungen oder Kombinationen davon, wobei insbesondere bevorzugt Komponente (E) ausgewählt ist aus der folgenden Gruppe: Triethylenglykol bis(3-tert-butyl-4-hydroxy-5-methylphenyl)propionat, Pentaerythritol Tetrakis(3-(3,5-di-tert-butyl-4-hydroxyphenyl)-propionat), N,N'-Hexamethylen bis[3-(3,5-di-t-butyl-4 -hydroxyphenyl)propionamid], Tris (2,4-di-tert-butylphenyl) phosphit, Tris (2,4-di-tert-butylphenyl)phosphit, oder Mischungen davon.

Bevorzugte organische Stabilisatoren sind Phenol- und/oder Phosphit-Verbindungen, wie z.B., Irganox 1010, Irganox 1098, Hostanox PAR 24 oder Irgafos 168. Besonders bevorzugt als Komponente (E) wird eine Mischung aus 10 Gew.-Teilen einer Mischung aus Irganox 1010 (CAS 6683-19-8, phenolisches Antioxidants) und Anox 20 (CAS 6683-19-8, phenolisches Antioxidants) im Verhältnis 7:3 sowie 2 Gew.-Teile Hostanox PAR24 (CAS: 31570-04-4, Tris(2,4-ditert-butylphenyl)phosphite).

Bevorzugte UV-Stabilisatoren sind beispielsweise ausgewählt aus der Gruppe bestehend aus N-(2-Ethoxyphenyl)-N'-(2-ethylphenyl)oxamide (Tinuvin 312), 2-(4,6-Diphenyl-1,3,5-triazin-2yl)-5-hexyloxyphenol (Tinuvin 1577), 2-( 4,6-Diaryl-1, 3, 5-triazin-2yl)-5-(alkoxy su bstitu iert)-phenol (Tinuvin 1600), 2-tert-butyl-6-(5-chlorobenzotriazol-2-yl)-4-methylphenol (Tinuvin 326), 2-(benzo-triazol-2-yl)-4,6-bis(2-phenylpropan-2-yl)phenol (Tinuvin 234), Bis(2,2,6,6,-tetramethyl-4-piperidyl)sebacat (Tinuvin 770 DF), N,N'-Bis(2,2,6,6-tetramethyl-4-piperidinyl)isophthalamid (Nylostab S-EED), 2-(2-Hydroxyphenyl)-benzotriazol-Derivat (Tinuvin Carboprotect), 2-(Benzotriazol-2-yl)-4,6-bis(2-methylbutan-2-yl)phenol (Tinuvin 328), 2-(Benzotriazol-2-yl)-6-[[3-(benzotriazol-2-yl)-2-hydroxy-5-(2,4,4-trimethylpentan-2-yl)phenyl]methyl]-4-(2,4,4-trimethylpentan-2-yl)-phenol (Tinuvin 360), Poly[[6-[(1,1,3,3-tetra-methylbutyl)amino]-1,3,5-triazin-2,4-diyl][(2,2,6,6-tetramethyl-4-piperidinyl)-imino]-1,6-hexandiyl[(2,2,6,6-tetramethyl-4-piperidinyl)-imino]]) (Chimassorb 944), 1-( 4-Metoxyphenyl)-3-( 4-tert-butylphenyl)-propan-1,3-dion (Parsol 1789) und Mischungen hiervon.

In einer bevorzugten Ausführungsform besteht die erfindungsgemässe thermoplastische Polyamid-Formmasse aus:
(A) 28 - 84.9 Gewichtsprozent der Komponente (A) bestehend aus:
   (A1) 20-100 Gewichtsprozent, vorzugsweise 40-85 Gewichtsprozent wenigstens eines aliphatischen teilkristallinen Polyamids auf Basis von aliphatischen Dicarbonsäuren und aliphatischen Diaminen;
   (A2) 0-80 Gewichtsprozent, vorzugsweise 15-60 Gewichtsprozent wenigstens eines amorphen teilaromatischen Polyamids und/oder wenigstens eines amorphen und/oder mikrokristallinen Polyamids,
   wobei sich die Gewichtsprozente der Komponenten (A1) und (A2) auf 100 Gewichtsprozent der Komponente (A) ergänzen;
(B) 15 - 50 Gewichtsprozent mineralischer Füllstoff, bestehend aus einer Mischung aus 45 bis 70 Gew.-% (krypto) kristalliner Kieselsäure (B1), 5 bis 15 Gew.-% amorpher Kieselsäure (B2) und 20 bis 40 Gew.-% kalziniertem Kaolin (B3), jeweils bezogen auf 100 Gew.-% (B), wobei die Komponente (B) einen Aluminiumoxid-Gehalt von 5 - 20 Gew.-%, und einen Siliciumoxid-Gehalt von 80 - 95 Gew.-%, bezogen auf 100 % (B) aufweist;
(C) 0 - 15 Gew.-% Glas- und/oder Kohlenstofffasern;
(D) 0.1 - 3.0 Gewichtsprozent schwarze Farbmittel, bevorzugt Russ;
(E) 0 - 4.0 Gewichtsprozent Additive;
wobei die Summe gebildet aus (A)-(E) 100 % der thermoplastischen Polyamid-Formmasse ergibt.

In einer weiteren bevorzugten Ausführungsform besteht die erfindungsgemässe thermoplastische Polyamid-Formmasse aus:
(A) 50 - 79.8 Gewichtsprozent der Komponente (A) bestehend aus:
   (A1) 20 - 100 Gewichtsprozent, vorzugsweise 55-80 Gewichtsprozent wenigstens eines aliphatischen teilkristallinen Polyamids ausgewählt aus der Gruppe bestehend aus: 66, 66/BAC6, 610 oder Mischungen davon;
   (A2) 0 - 80 Gewichtsprozent, vorzugsweise 20-45 Gewichtsprozent wenigstens eines amorphen teilaromatischen Polyamids ausgewählt aus der Gruppe bestehend aus: 6T/6I und/oder 10T/10I, jeweils mit einem Anteil von weniger als 50 Mol-% 6T- bzw. 10T-Einheiten, und/oder wenigstens eines cycloaliphatischen Polyamids ausgewählt aus der Gruppe bestehend aus: MACM12, PACM12, MACM12/PACM12, MACM14, MACM16 oder Mischungen davon,
   wobei sich die Gewichtsprozente der Komponenten (A1) und (A2) auf 100 Gewichtsprozent der Komponente (A) ergänzen;
(B) 20 - 45 Gewichtsprozent mineralischer Füllstoff, bestehend aus einer Mischung aus 45 bis 70 Gew.-% (krypto) kristalliner Kieselsäure (B1), 5 bis 15 Gew.-% amorpher Kieselsäure (B2) und 20 bis 40 Gew.-% kalziniertem Kaolin (B3), jeweils bezogen auf 100 Gew.-% (B), wobei die Komponente (B) einen Aluminiumoxid-Gehalt von 5 - 20 Gew.-%, und einen Siliciumoxid-Gehalt von 80 - 95 Gew.-%, bezogen auf 100 % (B) aufweist;
(D) 0.1 - 2.0 Gewichtsprozent schwarze Farbmittel, bevorzugt Russ;
(E) 0.1 - 3.0 Gewichtsprozent Additive;
wobei die Summe gebildet aus (A), (B), (D) und (E) 100 % der thermoplastischen Polyamid-Formmasse ergibt. In dieser bevorzugten Ausführungsform ist die Formmasse frei an Komponente (C), enthält also keine Glas- und/oder Kohlenstofffasern.

Des Weiteren betrifft die vorliegende Erfindung die Verwendung mineralischer Füllstoffe, bestehend aus einer Mischung aus 45 bis 70 Gew.-% (krypto) kristalliner Kieselsäure (B1), 5 bis 15 Gew.-% amorpher Kieselsäure (B2) und 20 bis 40 Gew.-% kalziniertem Kaolin (B3), jeweils bezogen auf 100 Gew.-% (B), wobei die Komponente (B) einen Aluminiumoxid-Gehalt von 5 - 20 Gew.-%, und einen Siliciumdioxid-Gehalt von 80 - 95 Gew.-%, bezogen auf 100 % (B) aufweist, in einer schwarzeingefärbten, mineralgefüllten Polyamid-Formmasse zur Verbesserung des tiefschwarzen Farbeindrucks, wobei die Farbhelligkeit L* der Polyamid-Formmasse, bestimmt gemäss DIN EN ISO 11664-4:2020 im CIELAB-Farbraum an einer Platte der Dimension 60 x 60 x 2 mm, maximal 30, bevorzugt maximal 28, besonders bevorzugt maximal 27 beträgt, falls der Glanz eingeschlossen wird und maximal 12, bevorzugt maximal 8, besonders bevorzugt maximal 6 beträgt, falls der Glanz ausgeschlossen wird. Auch hier ist der erfindungsgemässe mineralische Füllstoff bevorzugt in der Polyamid-Formmasse in einem Anteil im Bereich von 15 bis 50 Gewichtsprozent, vorzugsweise im Bereich von 20 bis 45 Gewichtsprozent in der Formmasse, bezogen auf das Gesamtgewicht der Polyamid-Formmasse, vorhanden.

Weitere Ausführungsformen sind in den abhängigen Ansprüchen angegeben.

### BESCHREIBUNG BEVORZUGTER AUSFÜHRUNGSFORMEN

Die in der Tabelle 1 angegebenen Komponenten wurden in den in den in den Tabellen 2 und 3 angegebenen Proportionen in einem zweiwelligen Extruder der Firma Werner und Pfleiderer mit einem Schneckendurchmesser von 25 mm bei vorgegebenen Prozessparametern (siehe Tabelle 4) compoundiert, wobei die Polyamidgranulate sowie die Zusatzstoffe in die Einzugszone dosiert wurden, während die mineralischen Füllstoffe über einen Sidefeeder 3 Gehäuseeinheiten vor der Düse in die Polymerschmelze dosiert wurden. Die Compounds zusammengefasst in Tabelle 2 und 3 wurden als Strang aus einer Düse mit 3 mm Durchmesser abgezogen und nach Wasserkühlung granuliert. Das Granulat wurde 24 Stunden bei 100 °C im Vakuum von 30 mbar getrocknet.

**Tabelle 1: In den Beispielen und Vergleichsbeispielen verwendete Materialien**

| **Komponenten** | **Beschreibung** | **Hersteller** |
|---|---|---|
| Polyamid 1 | PA 66, RV = 1,85, Tₘ = 260 °C, | Radici (IT) |
| Polyamid 2 | PA 66/BAC6 (70:30), RV = 1.62 , Tₘ = 225 °C | EMS-CHEMIE AG |
| Polyamid 3 | PA 66/BAC6 (60:40), RV = 1,60, Tm = 220 °C | EMS-CHEMIE AG |
| Polyamid 4 | PA 6I/6T (67:33), RV = 1.52 , T_{g}= 125 °C | EMS-CHEMIE AG |
| Mineral 1 (erfindungsgemässes Mineral) | Aktifit PF 115, kalzinierte und Aminosilanfunktionalisierte Neuburger Silikaterde, L* = 96.4, Korngrösse (D50) = 2.0 µm, BET Oberfläche = 9 m²/g, Ölzahl = 60 g/100g, Siliciumdioxid-Gehalt = 86 Gew.-%, Aluminiumoxid-Gehalt = 13 Gew.-%; mineralischer Füllstoff, bestehend aus einer Mischung aus 45 bis 70 Gew.-% (krypto) kristalliner Kieselsäure, 5 bis 15 Gew.-% amorpher Kieselsäure und 20 bis 40 Gew.-% kalziniertem Kaolin, jeweils bezogen auf 100 Gew.-% des Minerals | Hoffmann (DE) |
| Mineral 2 (nicht erfindungsgemässes Mineral) | Translink 445, mit primärem Aminosilan oberflächenmodifiziertes Kaolinit, mittlere Teilchengrösse 1.4 µm (D50). | BASF SE (DE) |
| Russ | Black Pearls 1100, lodine absorption (g/kg) 20, OAN (cc/100g): 105 (ASTM D-2414) | Cabot Corp. (CH) |
| Stabilisator | Irganox 1010 (CAS 6683-19-8) | BASF SE |
| Entformer | Calciumstearat | |

**Tabelle 2: Formmassen nach der Erfindung**

| **Komponenten** | **Einheit** | **B1** | **B2** | **B3** |
|---|---|---|---|---|
| Polyamid 1 (Komponente A1) | Gew.-% | | | 44.5 |
| Polyamid 2 (Komponente A1) | Gew.-% | 59.35 | | |
| Polyamid 3 (Komponente A1) | Gew.-% | | 59.35 | |
| Polyamid 4 (Komponente A2) | Gew.-% | | | 14.85 |
| Mineral 1 (Komponente B) | Gew.-% | 40 | 40 | 40 |
| Mineral 2 | Gew.-% | | | |
| Russ (Komponente D) | Gew.-% | 0.25 | 0.25 | 0.25 |
| Stabilisator (Komponente E) | Gew.-% | 0.3 | 0.3 | 0.3 |
| Entformer (Komponente E) | Gew.-% | 0.1 | 0.1 | 0.1 |

| **Eigenschaften** | | | | |
|---|---|---|---|---|
| L*-Wert mit Glanz | | 26.4 | 26.5 | 26.7 |
| L*-Wert ohne Glanz | | 5.78 | 5.03 | 5.9 |
| E-Modul | MPa | 5600 | 5600 | 6200 |
| Bruchspannung | MPa | 85 | 84 | 90 |
| Bruchdehnung | % | 2.3 | 2.2 | 3.0 |
| Schlagzähigkeit, Charpy, 23°C | kJ/m² | 42 | 40 | 68 |
| Kerbschlagzähigkeit, Charpy, 23°C | kJ/m² | 2.7 | 2.7 | 4.0 |

**Tabelle 3: Formmassen der Vergleichsbeispiele**

| **Komponenten** | **Einheit** | **VB1** | **VB2** | **VB3** |
|---|---|---|---|---|
| Polyamid 1 (Komponente A1) | Gew.-% | | | 44.5 |
| Polyamid 2 (Komponente A1) | Gew.-% | 59.35 | | |
| Polyamid 3 (Komponente A1) | Gew.-% | | 59.35 | |
| Polyamid 4 (Komponente A2) | Gew.-% | | | 14.85 |
| Mineral 1 (Komponente B) | Gew.-% | | | |
| Mineral 2 | Gew.-% | 40 | 40 | 40 |
| Russ (Komponente D) | Gew.-% | 0.25 | 0.25 | 0.25 |
| Stabilisator (Komponente E) | Gew.-% | 0.3 | 0.3 | 0.3 |
| Entformer (Komponente E) | Gew.-% | 0.1 | 0.1 | 0.1 |

| **Eigenschaften** | | | | |
|---|---|---|---|---|
| L*-Wert mit Glanz | | 31.2 | 30.2 | 31.5 |
| L*-Wert ohne Glanz | | 17.9 | 16.2 | 18.1 |
| E-Modul | MPa | 6500 | 6400 | 6600 |
| Bruchspannung | MPa | 96 | 95 | 102 |
| Bruchdehnung | % | 3.0 | 2.7 | 5.0 |
| Schlagzähigkeit, Charpy, 23°C | kJ/m² | 49 | 47 | 60 |
| Kerbschlagzähigkeit, Charpy, 23°C | kJ/m² | 2.8 | 28 | 4.4 |

**Tabelle 4: Prozessparameter Compoundierung**

| **Parameter** | **Temperaturprofil [°C]** |
|---|---|
| Temperatur Zone 1 | 80-100 |
| Temperatur Zone 2 | 230-250 |
| Temperatur Zone 3 bis 10 | 250-260 |
| Temperatur Zone 11 | 250-270 |
| Temperatur Zone 12 | 230-270 |
| Temperatur Düsenkopfes | 260-280 |
| Schmelzetemperatur | 250-280 |
| Durchsatz [kg/h] | 8-12 |
| Schneckendrehzahl [U/min] | 150-200 |

Die Compounds wurden mit einer Spritzgussmaschine Arburg Allrounder 320-210-750 zu Probekörpern bei definierten Zylindertemperaturen der Zonen 1 bis 4 von 240 bis 280 °C und einer Werkzeugtemperatur von 100 °C verspritzt.

### Messmethoden

### Im Rahmen dieser Anmeldung wurden die folgenden Messmethoden verwendet:

### Schmelzpunkt (Tm) und Schmelzenthalpie (ΔHm):

Der Schmelzpunkt und Schmelzenthalpie wurden nach ISO 11357-3 (2013) am Granulat bestimmt. Die DSC (Differential Scanning Calorimetry) Messungen wurden mit einer Aufheizrate von 20 K/min durchgeführt.

### Glasübergangstemperatur, Tg:

Die Bestimmung der Glasübergangstemperatur T_{g} erfolgte nach ISO 11357-2 (2013) an Granulat mittels Differential Scanning Calorimetry (DSC). Diese wurde bei jeder der beiden Aufheizungen mit einer Aufheizrate von 20 K/min durchgeführt. Nach der ersten Aufheizung wurde die Probe in Trockeneis abgeschreckt. Die Glasübergangstemperatur (T_{g}) wurde bei der zweiten Aufheizung bestimmt. Der Mittelpunkt des Glasübergangbereichs, welcher als Glasübergangstemperatur angegeben wurde, wurde nach der Methode "Half Height" ermittelt.

### Relative Viskosität, ηᵣₑₗ:

Die relative Viskosität wurde gemäss ISO 307 (2007) bei 20°C bestimmt. Dazu wurden 0.5 g Polymergranulat in 100 ml m-Kresol (soweit nicht anders angegeben) eingewogen, die Berechnung der relativen Viskosität (RV) nach RV = t/t₀ erfolgte in Anlehnung an Abschnitt 11 der Norm.

### Zug E-Modul:

Die Bestimmung des Zug-E-Moduls wurde gemäss ISO 527 (2012) bei 23°C mit einer Zuggeschwindigkeit von 1 mm/min an einem ISO-Zugstab (Typ A1, Masse 170 x 20/10 x 4) hergestellt gemäss der Norm: ISO/CD 3167 (2003), durchgeführt.

### Bruchspannung und Bruchdehnung:

Die Bestimmung von Bruchspannung und Bruchdehnung wurden gemäss ISO 527 (2012) bei 23°C mit einer Zuggeschwindigkeit von 5 mm/min an einem ISO-Zugstab, Typ A1 (Masse 170 x 20/10 x 4 mm), hergestellt gemäss der Norm ISO/CD 3167 (2003), durchgeführt.

### Schlagzähigkeit nach Charpy:

Die Bestimmung der Schlagzähigkeit nach Charpy wurde gemäss ISO 179/2*eU (1997, * 2 = instrumentiert) bei 23°C an einem ISO-Prüfstab, Typ B1 (Masse 80 x 10 x 4 mm), hergestellt gemäss der Norm ISO/CD 3167 (2003), durchgeführt.

### Kerbschlagzähigkeit nach Charpy:

Die Bestimmung der Kerbschlagzähigkeit nach Charpy wurde gemäss ISO 179/2*eA (1997, * 2 = instrumentiert) bei 23°C an einem ISO-Prüfstab, Typ B1 (Masse 80 x 10 x 4 mm), hergestellt gemäss der Norm ISO/CD 3167 (2003), durchgeführt.

### Farbmessung und Bestimmung der Luminanz (Farbhelligkeit L*)

Die CIE L*a*b*-Werte von Referenz- und Test-Farbplättchen wurden mit einem Spectrophotometer der Firma Datacolor (Gerätebezeichnung: Datacolor 650) unter den folgenden Messbedingungen gemäss DIN EN ISO 11664-4:2020 vor einem weisslackierten Kontrastblech bestimmt; Messmodus A: Reflexion, Messgeometrie: D/8°, Lichtart: D 65 10, Glanz: eingeschlossen, Kalibrierung: UV-kalibriert, Messblende: SAV, Messmodus B: Reflexion, Messgeometrie: D/8°, Lichtart: D 65 10, Glanz: ausgeschlossen, Kalibrierung: UV-kalibriert, Messblende: SAV.

### Diskussion der Resultate:

Die Vergleichsbeispiele VB1 bis VB3 auf Basis eines oberflächenbeschichteten Kaolinits, also einem Mineral des Standes der Technik, weisen alle eine Farbhelligkeit L* mit Glanz von über 30 und eine Farbhelligkeit L* ohne Glanz im Bereich von 16 bis 18 auf. Die Beurteilung der entsprechenden Farbplättchen mit dem Auge ergibt ein anthrazitgraues Erscheinungsbild. Dagegen erscheinen die Farbplättchen hergestellt mit den Formmassen der erfindungsgemässen Beispiele B1 bis B3 tiefschwarz. Dies zeigt sich auch in der Farbhelligkeit L* dieser Beispiele, die mit Glanz gemessen unter 27 und ohne Glanz gemessen unter 6 liegen. Die mechanischen Eigenschaften der erfindungsgemässen Formmassen liegen auf gutem Niveau, auch wenn insbesondere der E-Modul und die Bruchspannung im Vergleich mit den Vergleichsbeispielen etwas tiefer liegen.

## Patentansprüche

1. Thermoplastische Polyamid-Formmasse bestehend aus:
A 20 - 89.9 Gewichtsprozent wenigstens eines Polyamids;
B 10 - 55 Gewichtsprozent mineralischer Füllstoff, bestehend aus einer Mischung aus 45 bis 70 Gew.-% krypto kristalliner Kieselsäure B1, 5 bis 15 Gew.-% amorpher Kieselsäure B2 und 20 bis 40 Gew.-% kalziniertem Kaolin B3, jeweils bezogen auf 100 Gew.-% B, wobei die Komponente B einen Aluminiumoxid-Gehalt von 5 - 20 Gew.-%, und einen Siliciumoxid-Gehalt von 80 - 95 Gew.-%, bezogen auf 100 % B aufweist;
C 0 - 15 Gew.-% Glas- und/oder Kohlenstofffasern
D 0.1 - 5.0 Gewichtsprozent schwarze Farbmittel;
E 0 - 5.0 Gewichtsprozent Additive;
wobei die Summe gebildet aus A bis E 100 % der thermoplastischen Polyamid-Formmasse ergibt,
und wobei die thermoplastische Polyamid-Formmasse eine Farbhelligkeit L*, bestimmt gemäss DIN EN ISO 11664-4:2020 im CIELAB-Farbraum an einer Platte der Dimension 60 x 60 x 2 mm, von maximal 30 aufweist, falls der Glanz mitgemessen wird und von maximal 12 aufweist, falls der Glanz nicht mitgemessen wird.

2. Thermoplastische Polyamid-Formmasse nach Anspruch 1, **dadurch gekennzeichnet, dass** die Komponente A in einem Anteil von 28 - 84.9 Gewichtsprozent, vorzugsweise im Bereich von 50 - 79.8 Gewichtsprozent, bezogen auf die Komponenen A bis E, vorliegt.

3. Thermoplastische Polyamid-Formmasse nach einem der vorhergehenden Ansprüche, **dadurch gekennzeichnet, dass** die Komponente A besteht aus:
A1 20-100 Gewichtsprozent, vorzugsweise 40-85 Gewichtsprozent wenigstens eines aliphatischen teilkristallinen Polyamids auf Basis von aliphatischen Dicarbonsäuren und aliphatischen Diaminen und/oder wenigstens eines teilaromatischen teilkristallinen Polyamids auf Basis von Dicarbonsäuren und Diaminen;
A2 0-80 Gewichtsprozent, vorzugsweise 15-60 Gewichtsprozent wenigstens eines amorphen Polyamids,
wobei sich die Gewichtsprozent der Komponenten A1 und A2 auf 100 Gewichtsprozent der Komponente A ergänzen.

4. Thermoplastische Polyamid-Formmasse nach einem der vorhergehenden Ansprüche, **dadurch gekennzeichnet, dass** die die Polyamide der Komponente A1
teilkristalline aliphatische Polyamide sind, ausgewählt aus der Gruppe bestehend aus: PA 6, 46, 56, 66, 66/BAC6, 66/6, 69, 610, 612, 614, 616, 618, 810, 1010, 1012, 1212, 11, 12, 6/12, 66/6/610, wobei 66, 66/BAC6 und 610 bevorzugt sind und 66/BAC6, wobei BAC gleich 1,3-BAC ist, besonders bevorzugt ist,
und/oder teilkristalline teilaromatische Polyamide sind, ausgewählt aus der Gruppe bestehend aus: PA 6T/6I, 6T/66, 6T/6I/66, 6T/610, 6T/612, 6T/614, 6T/616, 9T, 9MT (M=2-Methyloctan-1,8-diamin), 10T, 11T, 10T/6T, 11T/6T, 12T, 10T/6T, 11/10T, 12/10T, 11/9T, 12/9T, 10T/1010, 10T/612, wobei der Anteil an Terephthalsäure bezogen auf den gesamten Gehalt an Dicarbonsäuren, bevorzugt mehr als 50 mol-%, insbesondere bevorzugt mehr als 55 mol-% ausmacht,
und/oder teilkristalline Polyamide sind, die über einen Schmelzpunkt von wenigstens 170 °C, vorzugsweise im Bereich von 175-340 °C oder, vorzugsweise wenn aliphatisch, im Bereich von 175 - 265 °C verfügen.

5. Thermoplastische Polyamid-Formmasse nach einem der vorhergehenden Ansprüche, **dadurch gekennzeichnet, dass** die die Polyamide der Komponente A2
ausgewählt sind aus der Gruppe bestehend aus den amorphen Polyamiden 12/MACMT, MACM10, MACM12, MACM14, MACM16, MACM18, MACMI/12, PACM10, PACM12, PACM14, PACM16, PACM18, PACMI/12, TMDC10, TMDC12, TMDC16, TMDC18, MACMT/MACMI/12, PACMT/PACMI/12, oder Mischungen davon,
und/oder ausgewählt sind aus der Gruppe bestehend aus den amorphen Polyamiden MXDI, MXDI/6I, MXD6/MXDI, 6I, 6/6I, 6T/6I, 10T/10I, 3-6T (3-6 = 2,2,4- bzw. 2,4,4-Trimethylhexandiamin) oder Mischungen davon, wobei die Systeme 6T/6I oder 10T/10Ieinen Anteil von weniger als 50 Mol-% 6T- bzw. 10T-Einheiten aufweisen, und wobei ein Zusammensetzungsbereich 6T:6I bzw. 10T/10I von 20:80 bis 45:55, insbesondere 25:75 bis 40:60 bevorzugt wird,
und/oder amorphe Polyamide sind, die über eine Glasübergangstemperatur (Tg) oberhalb von 90 °C, besonders bevorzugt oberhalb von 110 °C, insbesondere bevorzugt oberhalb von 120 °C verfügen.

6. Thermoplastische Polyamid-Formmasse nach einem der vorhergehenden Ansprüche, **dadurch gekennzeichnet, dass** die Komponente B in einem Anteil im Bereich von 15-50 Gewichtsprozent, vorzugsweise im Bereich von 20-45 Gewichtsprozent, bezogen auf die Komponenten A bis E, vorliegt.

7. Thermoplastische Polyamid-Formmasse nach einem der vorhergehenden Ansprüche, **dadurch gekennzeichnet, dass** Komponente B mit Silanverbindungen, bevorzugt mit Trialkoxysilanen, Dialkoxysilanen, Epoxysilanen, Vinylsilanen, (Meth)acryloxysilanen, Aminosilanen und Mercaptosilanen oberflächenbehandelt ist.

8. Thermoplastische Polyamid-Formmasse nach einem der vorhergehenden Ansprüche, **dadurch gekennzeichnet, dass** Komponente B mit einem primären und/oder sekundären Aminosilan, insbesondere bevorzugt mit einem sekundären Aminosilan, oberflächenbeschichtet, wobei die Menge des primären und/oder sekundären Aminosilans 0.01 bis 2.0 Gew.-%, bezogen auf Komponente B, beträgt.

9. Thermoplastische Polyamid-Formmasse nach einem der vorhergehenden Ansprüche, **dadurch gekennzeichnet, dass** Komponente C eine Glasfaser ist.

10. Formmasse nach einem der vorhergehenden Ansprüche, **dadurch gekennzeichnet, dass** die Komponente D in einem Anteil im Bereich von 0.1 - 3.0 Gewichtsprozent, vorzugsweise im Bereich von 0.1 - 2.0 Gewichtsprozent, bezogen auf die Komponenten A bis E, vorliegt;
und/oder dass die Komponente D ausgewählt ist aus der Gruppe bestehend aus: Russ, Graphit, Graphen, Nigrosine, schwarze Farbpigmente, schwarze Farbstoffe oder Kombinationen komplementärfarbiger Pigmente und/oder Farbstoffe oder Mischungen von ein oder mehreren dieser Farbmittel.

11. Thermoplastische Polyamid-Formmasse nach einem der vorhergehenden Ansprüche, **dadurch gekennzeichnet, dass** die Komponente E in einem Anteil im Bereich von 0 - 4.0 Gewichtsprozent, vorzugsweise 0.1 - 3.0 Gewichtsprozent, bezogen auf die Komponenten A bis E, vorliegt;
und/oder dass die Additive der Komponente E ausgewählt sind aus der Gruppe bestehend aus: Stabilisatoren, Alterungsschutzmittel, Antioxidantien, Antiozonantien, Lichtschutzmittel, UV-Stabilisatoren, UV-Absorber, UV-Blocker, anorganische Hitzestabilisatoren, insbesondere auf Basis von Kupferhalogeniden und Alkalihalogeniden, organische Hitzestabilisatoren, Leitfähigkeitsadditive, optische Aufheller, Verarbeitungshilfsmittel, Nukleierungsmittel, Kristallisationsbeschleuniger, Kristallisationsverzögerer, Fliesshilfsmittel, Gleitmittel, Entformungsmittel, Weichmacher, Markierungsstoffe und Mischungen hiervon.

12. Thermoplastische Polyamid-Formmasse nach einem der vorhergehenden Ansprüche, **dadurch gekennzeichnet, dass** die Formmasse besteht aus:
A 28 - 84.9 Gewichtsprozent der Komponente A bestehend aus:
A1 20-100 Gewichtsprozent, vorzugsweise 40-85 Gewichtsprozent wenigstens eines aliphatischen teilkristallinen Polyamids auf Basis von aliphatischen Dicarbonsäuren und aliphatischen Diaminen;
A2 0-80 Gewichtsprozent, vorzugsweise 15-60 Gewichtsprozent wenigstens eines amorphen Polyamids,
wobei sich die Gewichtsprozente der Komponenten A1 und A2 auf 100 Gewichtsprozent der Komponente A ergänzen;
B 15 - 50 Gewichtsprozent mineralischer Füllstoff, bestehend aus einer Mischung aus 45 bis 70 Gew.-% krypto kristalliner Kieselsäure B1, 5 bis 15 Gew.-% amorpher Kieselsäure B2 und 20 bis 40 Gew.-% kalziniertem Kaolin B3, jeweils bezogen auf 100 Gew.-% B, wobei die Komponente B einen Aluminiumoxid-Gehalt von 5 - 20 Gew.-%, und einen Siliciumoxid-Gehalt von 80 - 95 Gew.-%, bezogen auf 100 % B aufweist;
C 0 - 15 Gew.-% Glas- und/oder Kohlenstofffasern;
D 0.1 - 3.0 Gewichtsprozent schwarze Farbmittel, bevorzugt Russ;
E 0 - 4.0 Gewichtsprozent Additive;
wobei die Summe gebildet aus A bis E 100 % der thermoplastischen Polyamid-Formmasse ergibt.

13. Thermoplastische Polyamid-Formmasse nach einem der vorhergehenden Ansprüche, **dadurch gekennzeichnet, dass** die Formmasse besteht aus:
A 50 - 79.8 Gewichtsprozent der Komponente A bestehend aus:
A1 20 - 100 Gewichtsprozent, vorzugsweise 55 - 80 Gewichtsprozent wenigstens eines aliphatischen teilkristallinen Polyamids ausgewählt aus der Gruppe bestehend aus: 66, 66/BAC6, 610 oder Mischungen davon;
A2 0 - 80 Gewichtsprozent, vorzugsweise 20 - 45 Gewichtsprozent wenigstens eines amorphen teilaromatischen Polyamids ausgewählt aus der Gruppe bestehend aus: 6T/6I und/oder 10T/10I, jeweils mit einem Anteil von weniger als 50 Mol-% 6T- bzw. 10T-Einheiten,
wobei sich die Gewichtsprozente der Komponenten A1 und A2 auf 100 Gewichtsprozent der Komponente A ergänzen;
B 20 - 45 Gewichtsprozent mineralischer Füllstoff, bestehend aus einer Mischung aus 45 bis 70 Gew.-% krypto kristalliner Kieselsäure B1, 5 bis 15 Gew.-% amorpher Kieselsäure B2 und 20 bis 40 Gew.-% kalziniertem Kaolin B3, jeweils bezogen auf 100 Gew.-% B, wobei die Komponente B einen Aluminiumoxid-Gehalt von 5 - 20 Gew.-%, und einen Siliciumoxid-Gehalt von 80 - 95 Gew.-%, bezogen auf 100 % B aufweist;
D 0.1 - 2.0 Gewichtsprozent schwarze Farbmittel, bevorzugt Russ;
E 0.1 - 3.0 Gewichtsprozent Additive;
wobei die Summe gebildet aus A, B, D und E 100 % der thermoplastischen Polyamid-Formmasse ergibt.

14. Thermoplastische Polyamid-Formmasse nach einem der vorhergehenden Ansprüche, **dadurch gekennzeichnet, dass** die Polyamid-Formmasse eine Farbhelligkeit L*, bestimmt gemäss DIN EN ISO 11664-4:2020 im CIELAB-Farbraum an einer Platte der Dimension 60 x 60 x 2 mm, von maximal 28, bevorzugt maximal 27 aufweist, falls der Glanz mitgemessen wird und von maximal 8, bevorzugt maximal 6 aufweist, falls der Glanz nicht mitgemessen wird.

15. Formkörper, der eine Polyamid-Formmasse nach einem der Ansprüche 1 bis 14 enthält und der bevorzugt aus dieser Polyamid-Formmasse besteht.

16. Verwendung von mineralischen Füllstoffen, bestehend aus einer Mischung aus 45 bis 70 Gew.-% krypto kristalliner Kieselsäure B1, 5 bis 15 Gew.-% amorpher Kieselsäure B2 und 20 bis 40 Gew.-% kalziniertem Kaolin B3, jeweils bezogen auf 100 Gew.-% B, wobei die Komponente B einen Aluminiumoxid-Gehalt von 5 - 20 Gew.-%, und einen Siliciumoxid-Gehalt von 80 - 95 Gew.-%, bezogen auf 100 % B aufweist, in einer schwarzeingefärbten, mineralgefüllten Polyamid-Formmasse zur Verbesserung des tiefschwarzen Farbeindrucks, wobei die Farbhelligkeit L* der Polyamid-Formmasse, bestimmt gemäss DIN EN ISO 11664-4:2020 im CIELAB-Farbraum an einer Platte der Dimension 60 x 60 x 2 mm, maximal 30, bevorzugt maximal 28 beträgt, falls der Glanz eingeschlossen wird und maximal 12, bevorzugt maximal 8 beträgt, falls der Glanz ausgeschlossen wird.
